# EUROPEAN PATENT SPECIFICATION

(11) **EP 2 276 951 B1**
(45) Date of publication and mention of the grant of the patent: **12.03.2014**
(21) Application number: 08755965.4
(22) Date of filing: 20.05.2008
(51) Int. Cl.: F16J 15/10, B41J 2/175, F16J 15/06

(54) **SEAL AND SEAL/BOSS ASSEMBLY**
DICHTUNG UND DICHTUNGS-/VORSPRUNGSANORDNUNG
JOINT D'ÉTANCHÉITÉ ET ENSEMBLE JOINT D'ÉTANCHÉITÉ/BOSSAGE

(43) Date of publication of application: 26.01.2011
(73) Proprietor: Hewlett-Packard Development Company, L.P., Houston, TX 77070 (US)
(72) Inventor: SMITH, Mark A., Corvallis, Oregon 97330 (US)
(74) Representative: Holt, Daniel Richard
(86) International application number: PCT/US2008/064236
(87) International publication number: WO 2009/142625

(56) References cited:
- WO-A1-2008/029247
- JP-A- 2004 338 191
- JP-A- 2005 299 686
- JP-A- 2007 076 218
- US-A- 6 033 063
- US-A1- 2004 000 763
- US-A1- 2006 079 337

## Description

### BACKGROUND

Inkjet printers typically utilize a printhead that includes an array of orifices (also called nozzles) through which ink is ejected on to paper or other print media. One or more printheads may be mounted on a movable carriage that traverses back and forth across the width of the paper feeding through the printer, or the printhead(s) may remain stationary during printing operations, as in a page width array of printheads. A printhead may be an integral part of an ink cartridge or part of a discrete assembly to which ink is supplied from a separate, often detachable ink container. For printhead assemblies that utilize detachable ink containers, it is important that the operative fluid connection between the outlet of the ink container and the inlet to the printhead assembly, commonly referred to as a fluid interconnection or "F.I.", provide reliable ink flow from the container to the printhead assembly. Typically, ink is drawn from the ink container through a filter on the inlet to the printhead assembly. The inlet to the printhead assembly is commonly referred to as an inlet "tower" because it usually extends out from the surrounding structure. Excessive water vapor leaking from the ink container or printhead assembly at the F.I. could compromise critical properties of the ink. Thus, it is desirable to seal the FI against exposure to the atmosphere even after repeated installations and removals of the ink containers.

A rubber seal fitted around the outside of the tower, for example, may be used to help seal the FI. When an ink container is installed in the printhead assembly, the latching force used to secure the container in place in the printhead assembly presses the container outlet into the seal and compresses the seal against the base of the tower. When the container is removed, the seal rebounds back along the tower toward the original, uncompressed position. Thus, the rubber seal should fit closely to the tower but still be able to move up and down on the tower within a reasonable range of compression and rebound forces that may be generated in the seal with the container latching force. A rubber seal that moves up and down on a molded plastic boss, such as the F.I. tower structure, may employ a cylindrical inside surface mated with a cylindrical outside surface of the boss. The range of the normal force between the inside surface of the seal and the outside surface of the tower may vary by a factor of three depending on the dimensional variation of the parts within the manufacturing tolerance. This range of normal force and the resulting friction force, however, may impede the free movement of the seal on the tower, reducing the ability of the seal to rebound and reseal.

US 2006/079337 A1 describes a joint boot including a larger-diameter attachment part, a small-diameter attachment part and a bellows part. The large-diameter attachment part is provided on its inner periphery with plural convex portions and constructed to be capable of externally fitting in plural recessed portions formed on the outer periphery of the outer casting. The large-diameter attachment part and the bellows part are formed in separate bodies, and a fit cylinder part is extended at one extremity of the bellows part.

US 6,033,063 A describes an ink printer designed to make users free from any danger when an ink tank is replaced and to prevent ink from leaking out when the ink tank is detached. The joint part of an ink tank is pressed against the ink guide of a print head to couple the ink tank and the print head together, so that ink is supplied from the ink tank to the print head. The joint part is supplied with a porous material. When the ink tank is attached, the porous material is compressed and contained in the joint part. When the ink tank is detached from the print head, the volume of the porous material increases thereby raising its porosity. The ink remaining in the joint part is absorbed by the porous material whose porosity has been raised, so that ink is prevented from flowing out in the vicinity of the joint part when the ink tank is removed.

### DRAWINGS

Fig. 1 is a block diagram illustrating one embodiment of an inkjet printer.
Figs. 2 and 3 are perspective views of one embodiment of a carriage and printhead assembly, such as might be used in the printer of Fig. 1, with the ink containers exploded out from the carriage to show the inlets to the printhead assembly (Fig. 2) and the outlets from the ink containers (Fig. 3).
Fig. 4 is close-up perspective view of a portion of the carriage and printhead assembly of Figs. 2 and 3 showing the ink inlets in more detail.
Fig. 5 is a section view taken along the line 5-5 in Fig. 4 showing one embodiment of a seal for sealing the fluid interconnection between the container outlet and the printhead assembly inlet.
Fig. 6 is close-up section view showing the fluid interconnection of Fig. 5 in more detail.
Figs. 7-9 are perspective, plan and section views, respectively, of the seal shown in Figs. 5.
Figs. 10-11 and 12-13 are section views illustrating the improved ability of a bumpy surface seal design (Figs. 12-13), such as that shown in Figs. 6-9, to rebound after compression compared to a plain surface seal design (Figs. 10-11).
Fig. 14 is close-up section view showing a fluid interconnection according to another embodiment of the disclosure.
Fig. 15 is a plan view of the printhead assembly inlet tower and seal shown in Fig. 14.

### DESCRIPTION

Embodiments of the disclosure were developed in an effort, generally, to design a low cost elastomeric seal that fits closely on a molded plastic boss while still allowing sufficiently free movement along the boss throughout the dimensional variation of the parts for a given manufacturing tolerance and, more specifically, to help reliably seal the fluid interconnection between a printhead assembly and a replaceable ink container in an inkjet printer. Embodiments will be described, therefore, with reference to an inkjet printhead assembly that holds detachable/replaceable ink containers. Embodiments of the new seal and other aspects of the disclosure, however, are not limited to such implementations. The example embodiments shown in the Figures and described below, therefore, illustrate but do not limit the scope of the disclosure.

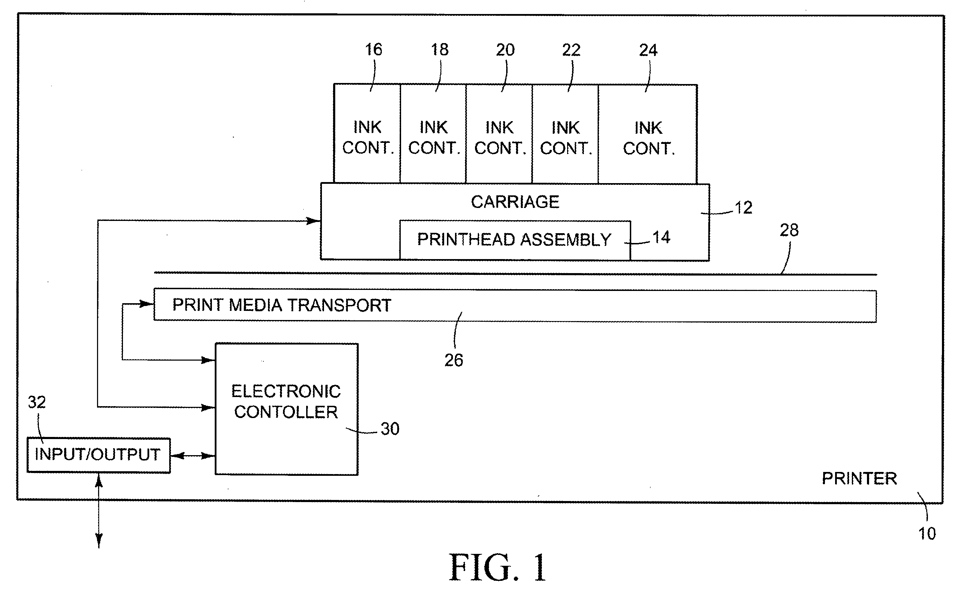

Fig. 1 is a block diagram illustrating an inkjet printer 10 in which embodiments of the new seal may be implemented. Referring to Fig. 1, printer 10 includes a carriage 12 carrying a printhead assembly 14 and detachable, replaceable ink containers 16, 18, 20, 22, and 24. Inkjet printer 10 and printhead assembly 14 represent more generally a fluid-jet precision dispensing device and fluid ejector assembly for precisely dispensing a fluid, such as ink. Printhead assembly 14 includes a printhead (not shown) through which ink from one or more containers 16-24 is ejected. For example, printhead assembly 14 may include two printheads -- one for a series of smaller, color containers 16-22 and one for a larger, black ink container 24. An inkjet printhead is typically a small electromechanical assembly that contains an array of miniature thermal, piezoelectric or other devices that are energized or activated to eject small droplets of ink out of an associated array of orifices. A typical thermal inkjet printhead, for example, includes an orifice plate arrayed with ink ejection orifices and firing resistors formed on an integrated circuit chip.

A print media transport mechanism 26 advances print media 28 past carriage 12 and printhead assembly 14. For a stationary carriage 12, media transport 26 may advance media 28 continuously past carriage 12. For a movable, scanning carriage 12, media transport 26 may advance media 28 incrementally past carriage 12, stopping as each swath is printed and then advancing media 28 for printing the next swath. An electronic controller 30 is operatively connected to a moveable, scanning carriage 12, printhead assembly 14 and media transport 26. Controller 30 communicates with external devices through an input/output device 32, including receiving print data for inkjet imaging. The presence of an input/output device 32, however, does not preclude the operation of printer 10 as a stand alone unit. Controller 30 controls the movement of carriage 12 and media transport 26. Controller 30 is electrically connected to each printhead in printhead assembly 14 to selectively energize the firing resistors, for example, to eject ink drops on to media 28. By coordinating the relative position of carriage 12 with media 28 and the ejection of ink drops, controller 30 produces the desired image on media 28.

While an inkjet printing device for ejecting ink onto print media is shown and described as one example implementation for embodiments of the new seal, such devices are not limited to jetting ink. In general, embodiments of the present disclosure described with reference to an inkjet printer or inkjet printing components pertain to any type of fluid-jet precision dispensing device or ejector assembly for dispensing a substantially liquid fluid. The fluid-jet precision dispensing device precisely prints or dispenses a substantially liquid fluid in that the latter is not substantially or primarily composed of gases such as air. Examples of such substantially liquid fluids include inks in the case of inkjet printing devices. Other examples of substantially liquid fluids include drugs, cellular products, organisms, chemicals, fuel, and so on, which are not substantially or primarily composed of gases such as air and other types of gases. Therefore, embodiments described with reference to an inkjet printer and a printhead assembly for ejecting ink onto media pertain more generally to any type of fluid-jet precision dispensing device or fluid ejector structure for dispensing a substantially liquid fluid.

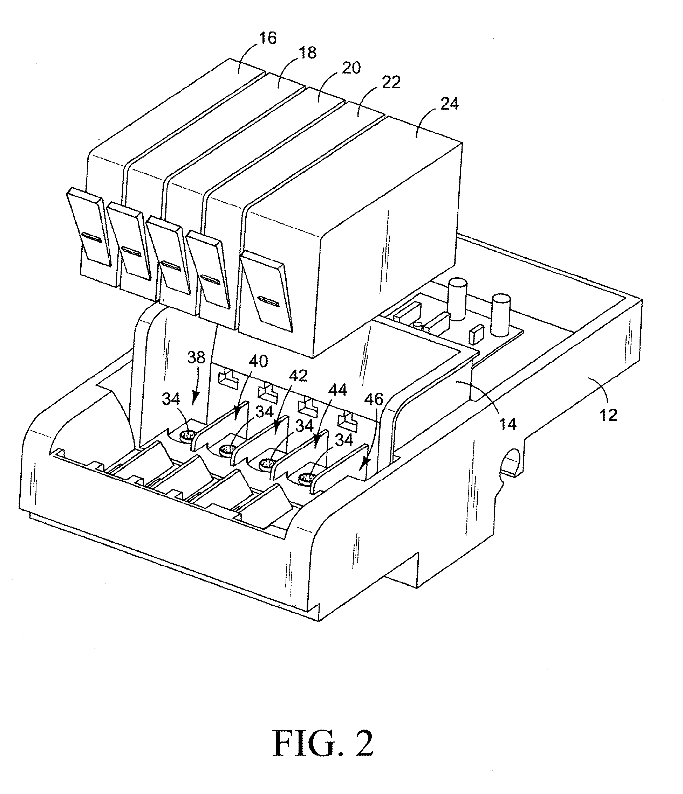

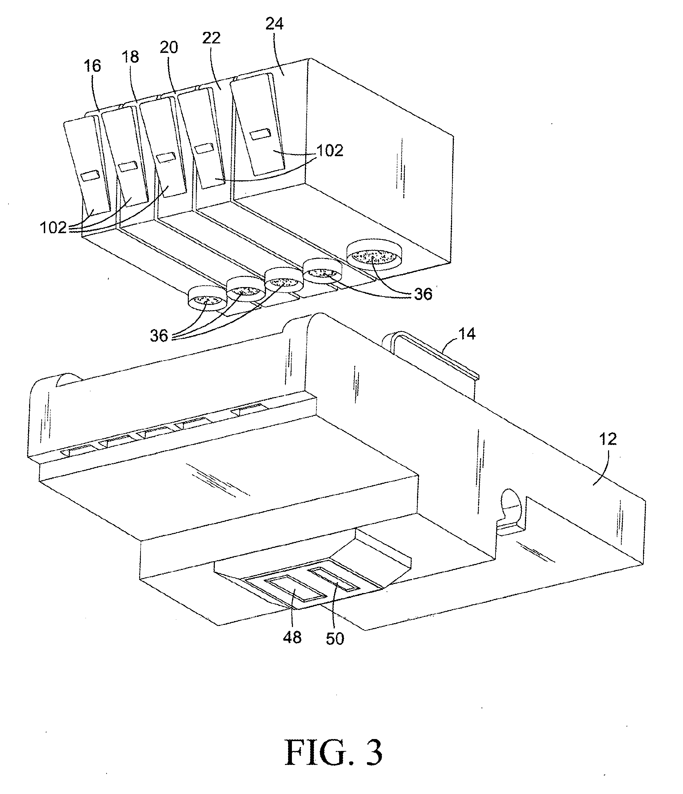

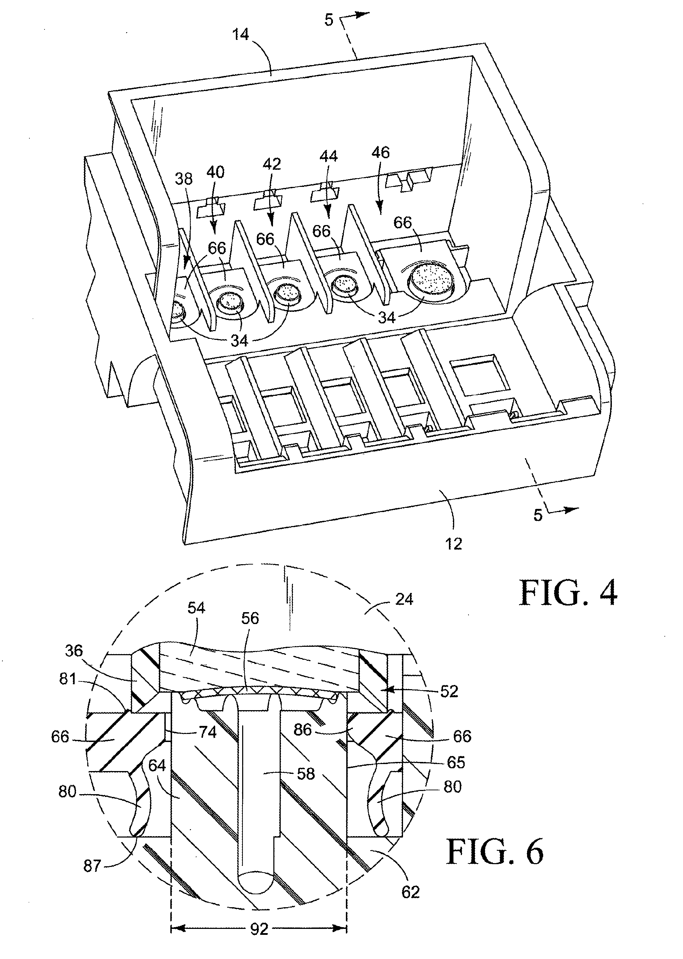

Figs. 2 and 3 are perspective views of one embodiment of a carriage 12 and printhead assembly 14 in printer 10. Ink containers 16-24 are exploded out from carriage 12 to show ink inlets 34 to printhead assembly 14 in Fig. 2 and to show ink outlets 36 from ink containers 16-24 in Fig. 3. Fig. 4 is a close-up perspective view of a portion of the carriage 12 and printhead assembly 14 showing ink inlets 34 in more detail. Referring first to Figs. 2 and 4, printhead assembly 14 includes an ink inlet 34 positioned at each bay 38, 40, 42, 44, and 46 for a corresponding ink container 16-24. Printhead assembly 14 and carriage 12 may be integrated together as a single part or printhead assembly 14 may be detachable from carriage 12. For a detachable printhead assembly 14, container bays 38-46 may extend out into carriage 12 as necessary or desirable to properly receive and hold containers 16-24. Referring now also to Fig. 3, in the embodiment shown, printhead assembly 14 includes two printheads 48 and 50. Ink from color ink containers 16-22, for example, is ejected from printhead 48 and ink from a black ink container 24 is ejected from printhead 50. Each ink container 16-24 includes an ink outlet 36 through which ink may flow from container 16-24 through an inlet 34 to a corresponding printhead 48 or 50 in printhead assembly 14.

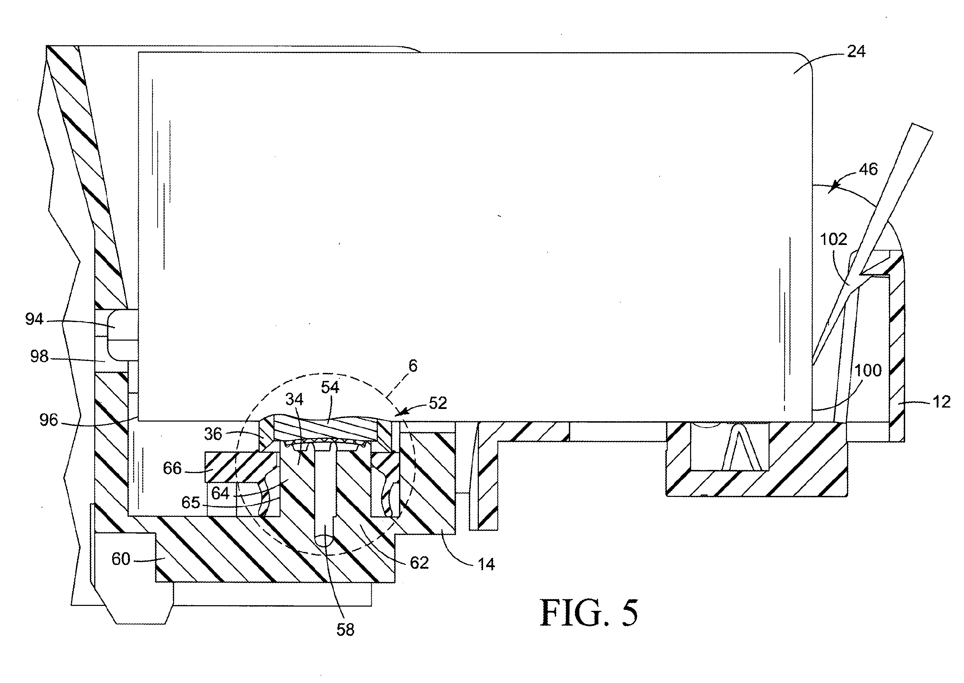

Fig. 5 is an elevation section view showing one embodiment of a fluid interconnection 52 between an ink container 24 and printhead assembly 14. Fig. 6 is close-up section view showing fluid interconnection 52 in more detail. Referring to Figs. 4-6, fluid interconnection 52 includes a wick 54 in container outlet 36 and a filter 56 at printhead assembly inlet 34. An ink channel 58 downstream from filter 56 carries ink to printhead 50 (Fig. 3). The body 60 of printhead assembly 14 is usually formed as a molded plastic part that includes ink inlet 34. Inlet 34 includes a base 62, a boss 64 projecting up from base 62 and an outer surface 64 of boss 64. Inlet boss 64 is sometimes referred to as a "tower" because it extends out from the surrounding base structure. Container outlet 36 fits around inlet tower 64 and seals against an elastomeric or other suitably resilient seal 66 to help prevent water vapor from leaving fluid interconnection 52.

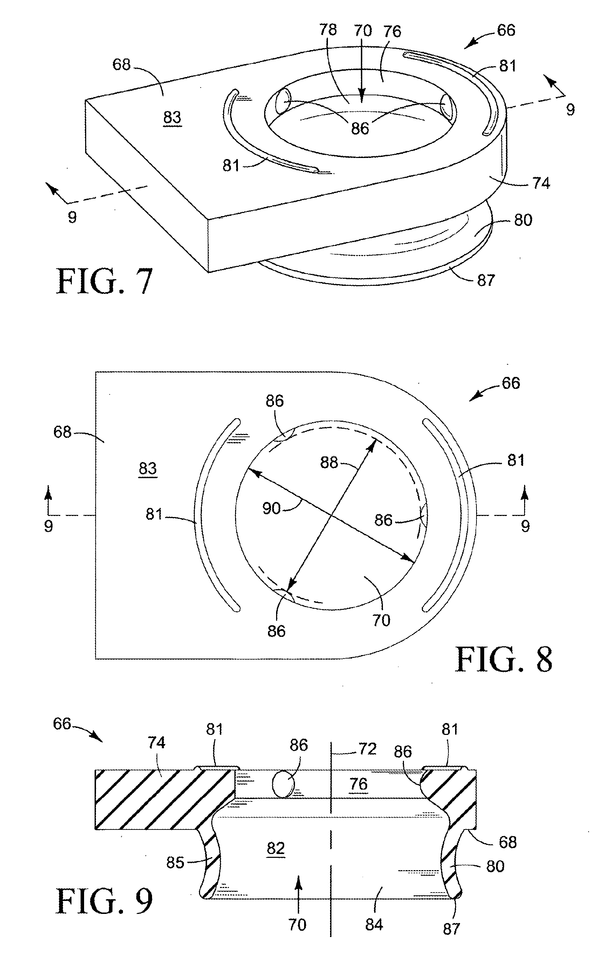

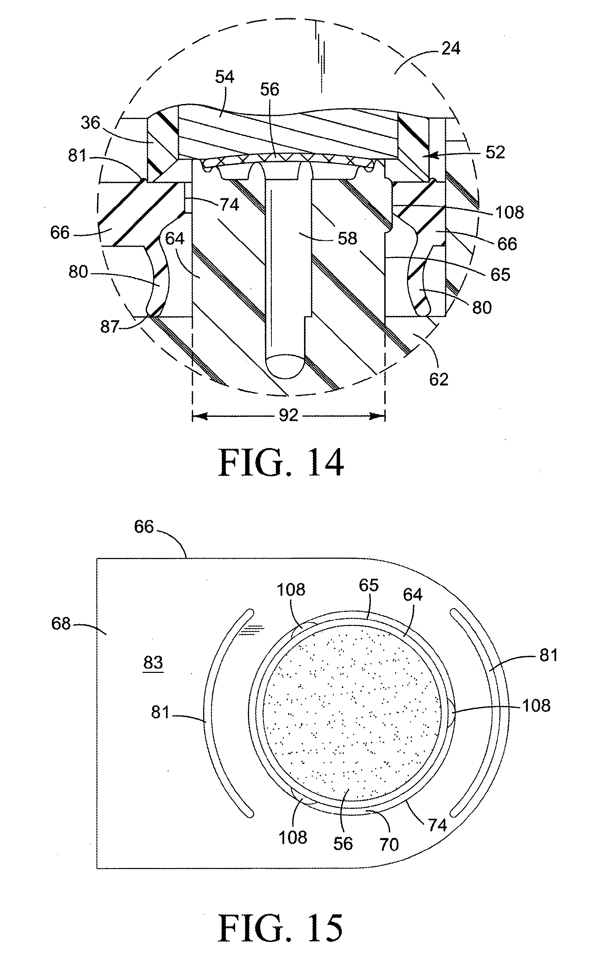

Seal 66 is shown in more detail in Figs. 7-9. Referring to Figs. 6-9, seal 66 may be characterized as having a body 68 made of an elastomeric or other suitable resilient material. Body 68 defines a generally cylindrical opening 70 that extends along a longitudinal axis 72. A collar part 74 of body 68 forms a cylindrical inner surface 76 that defines a first, smaller diameter part 78 of opening 70. An inwardly bulging base part 80 of body 68 forms a curved inner surface 82 that defines a second, larger diameter part 84 of opening 70. A plurality of bumps 86 protrude from collar inner surface 76. In the embodiment shown, bumps 86 are spherical caps spaced evenly around the circumference of inner surface 76. Other suitable configurations may be possible. In an alternative configuration, bumps 86 may be configured as ridges extending along the length (along axis 72) of collar surface 76, for example, to distribute the normal forces along a greater distance, and increasing the friction between the two surfaces 65 and 74. In alternative configurations, the bumps for be formed on tower outside surface 65, as described below with reference to Figs. 14 and 15, or on both collar surface 76 and tower surface 65.

A pair of arcuate ridges 81 may be formed in the comparatively expansive top surface 83 of seal 66 to help prevent these large areas on two tacky seals from sticking together during bulk packaging and/or feeding operations

When seal 66 is in place in printhead assembly 14, as shown in Figs. 5 and 6, collar 74 fits onto inlet tower 64 supported on base 80. A bottom rim 87 of base 80 rests on inlet base 62. Smaller opening part 78 may be characterized as having two inside diameters -- an inner inside diameter, represented by part number 88 in Fig. 8, and an outer inside diameter, represented by part number 90 in Fig. 8. Inner inside diameter 88 is defined by a circle passing through a tangent to the inside point of each bump 86. Outer inside diameter 90 is defined by the diameter across inner surface 76.

In one example configuration, inner I.D. 88 is smaller than the nominal outside diameter 92 (Fig. 6) of inlet tower 64 by an amount about equal to the manufacturing tolerance (t) for the two parts (inner I.D. 90 ≈ tower O.D. 92 - t) and outer I.D. 90 is equal to or slightly larger than the nominal tower O.D. 92 plus the tolerance of the two parts (outer I.D. 90 ≥ tower O.D. + t). Accordingly, the height of each bump 86 is equal or slightly greater than the tolerance of the two parts, by the same amount that outer I.D. 90 is greater than the tolerance, if any (h_{bump} ≥ t). In this configuration, if the dimensional variation in the two parts is smaller by the full amount of the tolerance (i.e., the greatest gap between outer I.D. 90 and tower O.D. 92), inner I.D. 88 will be about equal to tower O.D. 92, maintaining an engaged fit between the parts. If, however, the dimensional variation in the two parts is larger by the full amount of the tolerance (i.e., the smallest gap between outer I.D. 90 and tower O.D. 92), then bumps 86 will be compressed and/or collar inner surface 76 deformed into a tri-lobular shape but tower O.D. 92 will not contact collar outer I.D. 90. Thus, seal collar 74 is in contact with inlet tower outer surface 65 only at bumps 86 through the full range of the manufacturing tolerance between seal 66 and tower 64.

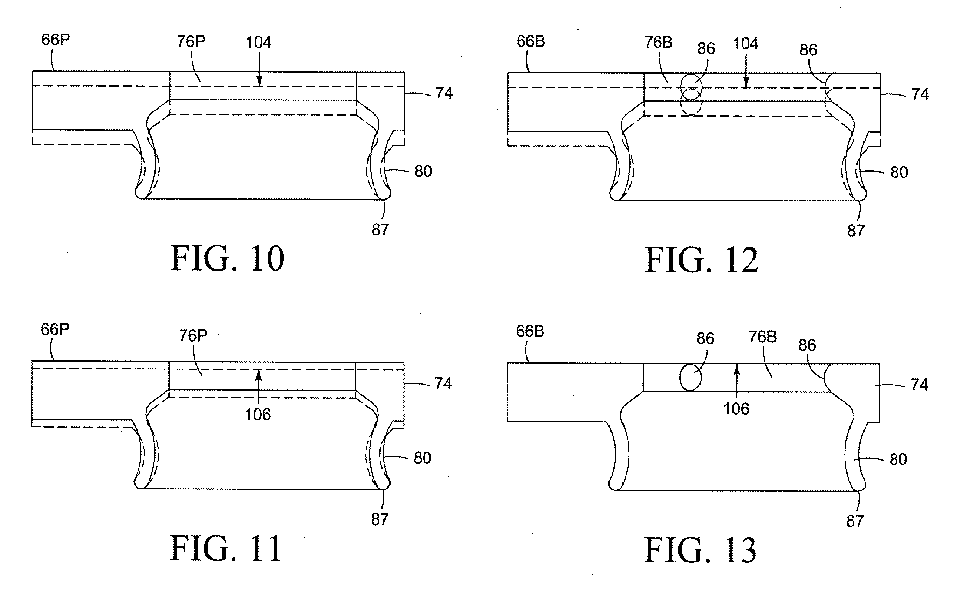

Referring again to Fig. 5, ink container 24 is installed in bay 46 with a toe-to-heel motion in which a key 94 on the front/toe 96 of container 24 is inserted into a mating keyway 98 in printhead assembly 14, and then the rear/heel 100 of container 24 is rotated down into bay 46 until a spring latch lever 102 snaps into carriage 12. The latching force generated through this installation sequence presses and holds container outlet 36 against seal 66, compressing seal 66 as described below with reference to Figs. 10-11 and 12-13.

Figs. 10-11 and 12-13 are section views illustrating the improved ability of a bumpy collar configuration (Figs. 12-13), such as that shown in Figs. 6-9, to rebound after compression compared to a plain collar configuration (Figs. 10-11). Cross hatching and contour lines are omitted from Figs. 10-13 for clarity. Figs. 10-13 illustrate generally the results of computer modeling showing much lower normal forces between the seal and the inlet tower for the three bump configuration shown in Figs. 7-9 compared to a plain configuration (for a nearly incompressible elastomeric seal using the same coefficient of friction and the same design tolerances (±) indicating the degree of interference fit from a greater interference fit at "-" to virtually no interference fit at "+").

Fig. 10 illustrates the compression of a seal 66P having a plain collar inner surface 76P when an ink container 16-24 is latched into position in a bay 38-46, as noted above with respect to Fig. 5. Fig. 12 illustrates the compression of a seal 66B having a bumpy a collar inner surface 76B. In the plain collar surface configuration, the contact area between seal collar 74 and inlet tower outer surface 65 extends all around the two surfaces. In the bump collar surface configuration, by contrast, the contact area between seal collar 74 and tower outer surface 65 is confined to the three bumps 86. Direction arrows 104 in Figs. 10 and 12 show the compression of seals 66P and 66B (when a container is latched into place) from an original uncompressed position, indicated by solid lines, to a compressed position, indicated by dashed lines. Bulging base 80 flexes as each seal 66P and 66B is compressed, generating a sealing force that pushes base rim 87 into and seals rim 87 against inlet base 62 and a rebound force urging each seal 66P and 66B back toward an uncompressed position.

Fig. 11 illustrates the decompression, or rebound, of plain collar seal 66P, when an ink container 16-24 in a bay 38-46 is unlatched for removal and replacement, for example. Fig. 13 illustrates the decompression, or rebound, of bumpy collar seal 66B. Direction arrows 106 in Figs. 11 and 13 show the rebound of seals 66P and 66B (when a container is unlatched) from the compressed position, indicated by dashed lines, to an uncompressed position, indicated by solid lines. As shown in Fig. 11, the increased contact area between a plain collar inner surface 76P and tower outer surface 65, and the corresponding higher friction force, significantly impedes decompression, preventing seal 66P from rebounding fully to the original uncompressed position. As shown in Fig. 13, the much smaller contact area between a bumpy collar inner surface 76B, and the corresponding lower friction force, does not significantly impede decompression, allowing seal 66B to rebound fully (or nearly fully) to the original uncompressed position. Similarly, the reduced contact area and correspondingly lower friction forces between a bumpy collar inner surface 76B and tower outer surface 65 means more of the compression force exerted by the container is used to flex bulging base 80, increasing the sealing force along base rim 87.

Seal 66 described above employs a lower spring constant and a higher preload to help minimize the impact of dimensional variation with a given manufacturing tolerance while increasing the sealing and rebound forces. Bumps 86 help lower the spring constant in two ways. First, bumps 86 reduce the contact area between the elastomeric seal collar 74 and inlet tower 64, thus lowering the spring rate of the elastomeric seal material. Second, three bumps 86 configured as shown and described allows collar 74 to deform at opening 78 into a tri-lobular shape without inner surface 76 contacting inlet tower 64. The sensitivity of the three bump seal configuration to dimensional variation within a given tolerance is significantly reduced compared to a plain cylindrical configuration. This reduced sensitivity allows seal 66 to fit closely on tower 64 and still move more freely on tower 64, improving the reliability of the seal. Also, bumps 66 can be included in a molded seal for little or no extra cost for a reliable, low cost, single-piece seal.

Figs. 14 and 15 illustrate an alternative embodiment in which the friction control bumps are formed on printhead assembly inlet tower 64, rather than on seal 66. In the embodiment shown in Figs. 14 and 15, a plurality of ridges 108 protrude from outer surface 65 of inlet tower 64. There are no bumps on inner surface 76 of seal collar 74 (a plain collar seal 66P shown in Figs. 10 and 11, for example). As shown in Fig. 14, ridges 108 may extend lengthwise along tower surface 65 for a length equal to or greater than the effective length that collar inner surface 76 bears on tower outer surface 65 (the length of collar surface 76 plus the length of compression), to maintain contact along the full length of collar surface 76 throughout seal compression and rebound. Ridges 108 may be longer if necessary or desirable to facilitate molding tower 64.

As noted at the beginning of this Description, the example embodiments shown in the figures and described above illustrate but do not limit the disclosure. Other forms, details, and embodiments may be made and implemented. Therefore, the foregoing description should not be construed to limit the scope of the disclosure, which is defined in the following claims.

## Claims

1. A seal (66), comprising:
a body (68) of resilient material having an opening (70) therein,
wherein a first, smaller diameter part (78) of the opening (70) is defined by an inner surface (76) having a plurality of bumps (86) protruding therefrom, the bumps (86) being spaced around the circumference of the inner surface (76), and
wherein a second, larger diameter part (84) of the opening (70) is defined by an inwardly bulging sidewall (85); and wherein the inwardly bulging sidewall has only a single inward bulge defined by a curved inner surface of the inwardly bulging sidewall.

2. The seal (66) of Claim 1, wherein the opening (70) extends along a longitudinal axis (72) and the inwardly bulging sidewall (85) is configured to flex inwardly towards the longitudinal axis when the body (68) is compressed along the longitudinal axis (72) to generate a rebound force urging the body (68) back toward an uncompressed position.

3. The seal (66) of Claim 1, wherein the bumps (86) comprise three spherical caps spaced evenly about the circumference of the inner surface (76).

4. The seal (66) of Claim 1, comprising:
an elastomeric collar (74) having the opening (70) therein for closely receiving a part (64), the opening (70) having a longitudinal axis (72), wherein the plurality of bumps (86) are elastomeric bumps on the collar (74) protrude into the opening (70) such that the part (64) received closely into the opening (70) is supported laterally on the bumps (86); and
a flexible base (80) for supporting the collar (74), wherein the base (80) comprises the inwardly bulging sidewall (85) and is configured to flex when compressed along the longitudinal axis (72) and rebound back toward an original position when uncompressed.

5. The seal (66) of Claim 4, wherein the collar (74) and base (80) are formed together in a single body (68) of elastomeric material.

6. The seal (66) of Claim 5, wherein the inwardly bulging sidewall (85) is configured to flex when the body (68) is compressed along the longitudinal axis (72) to generate a rebound force urging the body (68) back toward an original uncompressed position.

7. The seal (66) of Claim 4, wherein the bumps (86) comprise three spherical caps spaced evenly about a periphery of the opening (70).

8. The seal (66) of Claim 1 or Claim 4, wherein the opening (70) in the collar (74) comprises a generally cylindrical opening.

9. An assembly, comprising:
a boss (64) protruding from a boss base (60);
an elastomeric seal (66) comprising a collar (74) and a flexible collar base (80),
wherein the elastomeric seal (66) is arranged on the boss (64) such that the flexible collar base (80) supports the collar (74) on the boss base (60), the collar (74) having an opening (70) therein closely receiving the boss (64) along a longitudinal axis (72) and the collar base (80) configured to flex when compressed along the longitudinal axis (72) and rebound back toward an original position when uncompressed; and
a plurality of elastomeric bumps (86, 108) on the collar (74) and/or on the boss (64), the bumps (86, 108) being spaced around the circumference of the boss (64) and protruding into the opening (70) such that the collar (74) is supported laterally around the boss (64) on the bumps (86, 108);
and wherein the collar base has a curved inner wall (82) defining a single inward bulge towards the longitudinal axis

10. The assembly of Claim 9, wherein the bumps comprise a plurality of bumps (86) on only the collar (74).

11. The assembly of Claim 10, wherein the opening (70) in the collar (74) comprises a cylindrical opening and the bumps (86) comprise three spherical caps spaced evenly about a periphery of the opening (70).

12. The assembly of Claim 9, wherein the bumps comprise a plurality of bumps (108) on only the boss (64).

13. The assembly of Claim 12, wherein the opening (70) in the collar (74) comprises a cylindrical opening (70) and the bumps (108) comprise three ridges extending lengthwise on and spaced evenly about a periphery of the boss (64).

14. The assembly of Claim 9 wherein the collar base (80) is configured to flex inwardly towards the longitudinal axis when compressed along the longitudinal axis (72).

## Patentansprüche

1. Eine Dichtung (66), umfassend:
einen Körper (68) aus elastischem Material mit einer Öffnung (70) darin,
wobei ein erster Teil (78) der Öffnung (70) mit einem kleineren Durchmesser von einer Innenfläche (76) mit mehreren daraus hervorragenden Erhebungen (86) definiert wird, wobei die Erhebungen (86) um den Umfang der Innenfläche (76) herum beabstandet sind, und
wobei ein zweiter Teil (84) der Öffnung (70) mit einem größeren Durchmesser von einer nach innen ausbauchenden Seitenwand (85) definiert wird; und wobei die nach innen ausbauchende Seitenwand nur eine einzige nach innen gerichtete Ausbauchung aufweist, die von einer gewölbten Innenfläche der nach innen ausbauchenden Seitenwand definiert wird.

2. Die Dichtung (66) nach Anspruch 1, wobei die Öffnung (70) sich entlang einer Längsachse (72) erstreckt und die nach innen ausbauchende Seitenwand (85) dazu konfiguriert ist, sich nach innen zur Längsachse hin zu biegen, wenn der Körper (68) entlang der Längsachse (72) komprimiert wird, um eine Rücksprungkraft zu erzeugen, die den Körper (68) zurück zu einer dekomprimierten Position hin drängt.

3. Die Dichtung (66) nach Anspruch 1, wobei die Erhebungen (86) drei Kugelkappen umfassen, die gleichmäßig um den Umfang der Innenfläche (76) herum beabstandet sind.

4. Die Dichtung (66) nach Anspruch 1, umfassend:
eine elastomere Manschette (74) mit der Öffnung (70) darin zum dichten Aufnehmen eines Teils (64), wobei die Öffnung (70) eine Längsachse (72) aufweist, wobei die mehreren Erhebungen (86) elastomere Erhebungen auf der Manschette (74) sind, die in die Öffnung (70) hineinragen, so dass der Teil (64), der dicht in die Öffnung (70) aufgenommen wird, seitlich auf den Erhebungen (86) getragen wird; und
eine flexible Basis (80) zum Tragen der Manschette (74), wobei die Basis (80) die nach innen ausbauchende Seitenwand (85) umfasst und dazu konfiguriert ist, sich zu biegen, wenn sie entlang der Längsachse (72) komprimiert wird, und zurück zu einer ursprünglichen Position hin zu springen, wenn sie dekomprimiert wird.

5. Die Dichtung (66) nach Anspruch 4, wobei die Manschette (74) und die Basis (80) zusammen in einem einzigen Körper (68) aus elastomerem Material ausgebildet sind.

6. Die Dichtung (66) nach Anspruch 5, wobei die nach innen ausbauchende Seitenwand (85) dazu konfiguriert ist, sich zu biegen, wenn der Körper (68) entlang der Längsachse (72) komprimiert wird, um eine Rücksprungkraft zu erzeugen, die den Körper (68) zurück zu einer ursprünglichen dekomprimierten Position hin drängt.

7. Die Dichtung (66) nach Anspruch 4, wobei die Erhebungen (86) drei Kugelkappen umfassen, die gleichmäßig um einen Umfang der Öffnung (70) herum beabstandet sind.

8. Die Dichtung (66) nach Anspruch 1 oder Anspruch 4, wobei die Öffnung (70) in der Manschette (74) eine allgemein zylindrische Öffnung umfasst.

9. Eine Anordnung, umfassend:
einen Ansatz (64), der aus einer Ansatzbasis (60) hervorragt;
eine elastomere Dichtung (66), die eine Manschette (74) und eine flexible Manschettenbasis (80) umfasst, wobei die elastomere Dichtung (66) auf dem Ansatz (64) angeordnet ist, so dass die flexible Manschettenbasis (80) die Manschette (74) auf der Ansatzbasis (60) trägt, wobei die Manschette (74) eine Öffnung (70) darin aufweist, die den Ansatz (64) entlang einer Längsachse (72) dicht aufnimmt, und die Manschettenbasis (80) dazu konfiguriert ist, sich zu biegen, wenn sie entlang der Längsachse (72) komprimiert wird, und zurück zu einer ursprünglichen Position hin zu springen, wenn sie dekomprimiert wird; und
mehrere elastomere Erhebungen (86, 108) auf der Manschette (74) und/oder auf dem Ansatz (64), wobei die Erhebungen (86, 108) um den Umfang des Ansatzes (64) herum beabstandet sind und in die Öffnung (70) hineinragen, so dass die Manschette (74) seitlich um den Ansatz (64) herum auf den Erhebungen (86, 108) getragen wird;
und wobei die Manschettenbasis eine gewölbte Innenwand (82) aufweist, die eine einzige nach innen gerichtete Ausbauchung zur Längsachse hin definiert.

10. Die Anordnung nach Anspruch 9, wobei die Erhebungen mehrere Erhebungen (86) auf nur der Manschette (74) umfassen.

11. Die Anordnung nach Anspruch 10, wobei die Öffnung (70) in der Manschette (74) eine zylindrische Öffnung umfasst und die Erhebungen (86) drei Kugelkappen umfassen, die gleichmäßig um einen Umfang der Öffnung (70) herum beabstandet sind.

12. Die Anordnung nach Anspruch 9, wobei die Erhebungen mehrere Erhebungen (108) auf nur dem Ansatz (64) umfassen.

13. Die Anordnung nach Anspruch 12, wobei die Öffnung (70) in der Manschette (74) eine zylindrische Öffnung (70) umfasst und die Erhebungen (108) drei Rippen umfassen, die sich der Länge nach auf dem Ansatz erstrecken und gleichmäßig um einen Umfang des Ansatzes (64) herum beabstandet sind.

14. Die Anordnung nach Anspruch 9, wobei die Manschettenbasis (80) dazu konfiguriert ist, sich nach innen zur Längsachse hin zu biegen, wenn sie entlang der Längsachse (72) komprimiert wird.

## Revendications

1. Joint d'étanchéité (66), comprenant :
un corps (68) de matériau élastique ayant une ouverture (70) à l'intérieur de celui-ci,
dans lequel une première partie de diamètre plus petit (78) de l'ouverture (70) est définie par une surface interne (76) ayant une pluralité de bossages (86) faisant saillie de celle-ci, les bossages (86) étant espacés autour de la circonférence de la surface interne (76), et
dans lequel une seconde partie de diamètre plus grand (84) de l'ouverture (70) est définie par une paroi latérale bombée vers l'intérieur (85) ; et dans lequel la paroi latérale bombée vers l'intérieur a uniquement un seul renflement vers l'intérieur défini par une surface interne incurvée de la paroi latérale bombée vers l'intérieur.

2. Joint d'étanchéité (66) selon la revendication 1, dans lequel l'ouverture (70) s'étend le long d'un axe longitudinal (72) et la paroi latérale bombée vers l'intérieur (85) est configurée pour fléchir vers l'intérieur vers l'axe longitudinal lorsque le corps (68) est comprimé le long de l'axe longitudinal (72) pour générer une force de rebond sollicitant le corps (68) en retour vers une position non comprimée.

3. Joint d'étanchéité (66) selon la revendication 1, dans lequel les bossages (86) comprennent trois tétons sphériques espacés uniformément autour de la circonférence de la surface interne (76).

4. Joint d'étanchéité (66) selon la revendication 1, comprenant :
un collier élastomère (74) ayant l'ouverture (70) à l'intérieur de celui-ci pour recevoir étroitement une pièce (64), l'ouverture (70) ayant un axe longitudinal (72), dans lequel la pluralité de bossages (86) sont des bossages élastomères sur le collier (74) faisant saillie dans l'ouverture (70) de telle sorte que la pièce (64) reçue étroitement dans l'ouverture (70) est supportée latéralement sur les bossages (86) ; et
une base souple (80) pour supporter le collier (74), dans lequel la base (80) comprend la paroi latérale bombée vers l'intérieur (85) et est configurée pour fléchir lorsqu'elle est comprimée le long de l'axe longitudinal (72) et rebondir en retour vers une position d'origine lorsqu'elle n'est pas comprimée.

5. Joint d'étanchéité (66) selon la revendication 4, dans lequel le collier (74) et la base (80) sont formés ensemble dans un seul corps (68) de matériau élastomère.

6. Joint d'étanchéité (66) selon la revendication 5, dans lequel la paroi latérale bombée vers l'intérieur (85) est configurée pour fléchir lorsque le corps (68) est comprimé le long de l'axe longitudinal (72) pour générer une force de rebond sollicitant le corps (68) en retour vers une position non comprimée d'origine.

7. Joint d'étanchéité (66) selon la revendication 4, dans lequel les bossages (86) comprennent trois tétons sphériques espacés uniformément autour d'une périphérie de l'ouverture (70).

8. Joint d'étanchéité (66) selon la revendication 1 ou 4, dans lequel l'ouverture (70) dans le collier (74) comprend une ouverture généralement cylindrique.

9. Ensemble, comprenant :
une bosse (64) faisant saillie d'une base de bosse (60) ;
un joint d'étanchéité élastomère (66) comprenant un collier (74) et une base de collier souple (80),
dans lequel le joint d'étanchéité élastomère (66) est agencé sur la bosse (64) de telle sorte que la base de collier souple (80) supporte le collier (74) sur la base de bosse (60), le collier (74) ayant une ouverture (70) à l'intérieur de celui-ci recevant étroitement la bosse (64) le long d'un axe longitudinal (72) et la base de collier (80) étant configurée pour fléchir lorsqu'elle est comprimée le long de l'axe longitudinal (72) et rebondir en retour vers une position d'origine lorsqu'elle n'est pas comprimée ; et
une pluralité de bossages élastomères (86, 108) sur le collier (74) et/ou sur la bosse (64), les bossages (86, 108) étant espacés autour de la circonférence de la bosse (64) et faisant saillie dans l'ouverture (70) de telle sorte que le collier (74) est supporté latéralement autour de la bosse (64) sur les bossages (86, 108) ;
et dans lequel la base de collier a une paroi interne incurvée (82) définissant un seul renflement vers l'intérieur vers l'axe longitudinal.

10. Ensemble selon la revendication 9, dans lequel les bossages comprennent une pluralité de bossages (86) uniquement sur le collier (74).

11. Ensemble selon la revendication 10, dans lequel l'ouverture (70) dans le collier (74) comprend une ouverture cylindrique et les bossages (86) comprennent trois tétons sphériques espacés uniformément autour d'une périphérie de l'ouverture (70).

12. Ensemble selon la revendication 9, dans lequel les bossages comprennent une pluralité de bossages (108) uniquement sur la bosse (64).

13. Ensemble selon la revendication 12, dans lequel l'ouverture (70) dans le collier (74) comprend une ouverture cylindrique (70) et les bossages (108) comprennent trois nervures s'étendant dans le sens de la longueur et espacées uniformément autour d'une périphérie de la bosse (64).

14. Ensemble selon la revendication 9, dans lequel la base de collier (80) est configurée pour fléchir vers l'intérieur vers l'axe longitudinal lorsqu'elle est comprimée le long de l'axe longitudinal (72).
